# EUROPEAN PATENT APPLICATION

(11) **EP 3 130 630 A1**
(43) Date of publication of application: **15.02.2017**
(21) Application number: 15180823.5
(22) Date of filing: 12.08.2015
(51) Int. Cl.: C08K 3/04

(54) **RUBBER COMPOSITIONS WITH LOW CONTENT OF ZINC OXIDE**

(71) Applicant: Humboldt Universität zu Berlin, 10099 Berlin (DE)
(72) Inventor: GLEBOVA, Yulia, 140009 Lyubertsy (RU); RABE, Jürgen P., 14163 Berlin (DE); SEVERIN, Nikolai, 12439 Berlin (DE)
(74) Representative: Hamm & Wittkopp Patentanwälte PartmbB

(57) **Abstract**

The present invention provides new compositions comprising doped graphene-like materials for the vulcanization of rubber with a reduced content of zinc oxide (ZnO), their uses and methods of producing such compositions. In addition, rubber products comprising the above-mentioned compositions and objects built of said rubber products are provided.

## Description

### Field of the invention

The present invention generally relates to rubber compositions comprising doped graphene-like materials for the vulcanization of rubber with a reduced content of zinc oxide (ZnO), their uses, and methods of producing such compositions. Furthermore, the present invention relates to rubber products comprising the above-mentioned compositions and objects built of or comprising said products, in particular to tires and vehicles.

### Background of the invention

Elastomers are used inter alia for seals, adhesives and molded flexible parts. Application areas for different types of rubbers are manifold and cover segments as diverse as tires, shoe soles, belts as well as dampening and insulating elements.

Vulcanized rubber compounds, in particular sulfur-vulcanized rubber compounds are used among other things for the production of tires or in particular of tire treads.

In the vulcanization process, usually several substances are added to control the process, such as accelerators and/or activators which are used that help to regulate the vulcanization kinetics and develop its effectiveness, for example, shorten the vulcanization time or reduce the necessary vulcanization temperature. The activators are frequently metal oxides, in particular zinc oxide. Zinc compounds in rubbers, however, are falling into the discussion because zinc, in particular in the form of zinc oxide, was classified as environmentally hazardous and very toxic to aquatic organisms. It is feared that especially large amounts of zinc and zinc oxide may enter the environment by the abrasion of tires; see "Tire-Wear Particles as a Source of Zinc to the Environment" in Environ. Sci. Technol. (2004) 38, 4206-4214 for the estimations of ZnO release into environment from tires.

For reducing but not avoiding the content of zinc oxide in sulfur-rubber mixtures, the German patent application DE 10 2008 008 105 A1 proposes addition of metal (meth) acrylates, in particular zinc (meth) acrylates to the rubber mixture.

However, there is still demand for new compositions for rubber production with reduced zinc oxide content, or compositions without any zinc oxide, respectively, in the field. Accordingly, it is an objective of the present invention to replace at least a portion of the zink oxide required as an activator in mixtures and/or compositions for rubber production.

Furthermore, it is an objective of the present invention to find alternative activators for the common vulcanization, which do not have the disadvantages of zinc oxide and may be used to replace a part of the zinc oxide or to replace it completely in said mixtures and/or compositions.

The solution to this problem is provided by the embodiments of the present invention as characterized in the claims and disclosed in the description and illustrated in the Examples and Figures further below.

### Summary of the invention

Within experiments performed in accordance with the present invention and described in detail in the Examples section further below, the inventors made the surprising finding that the amount of zinc oxide in sulfur curable rubber mixtures/compositions including a carbon double bond (C=C) - containing elastomer can be greatly reduced or even completely avoided by using a doped graphene-like component, as described in detail below and illustrated in the figures, in said mixture/composition.

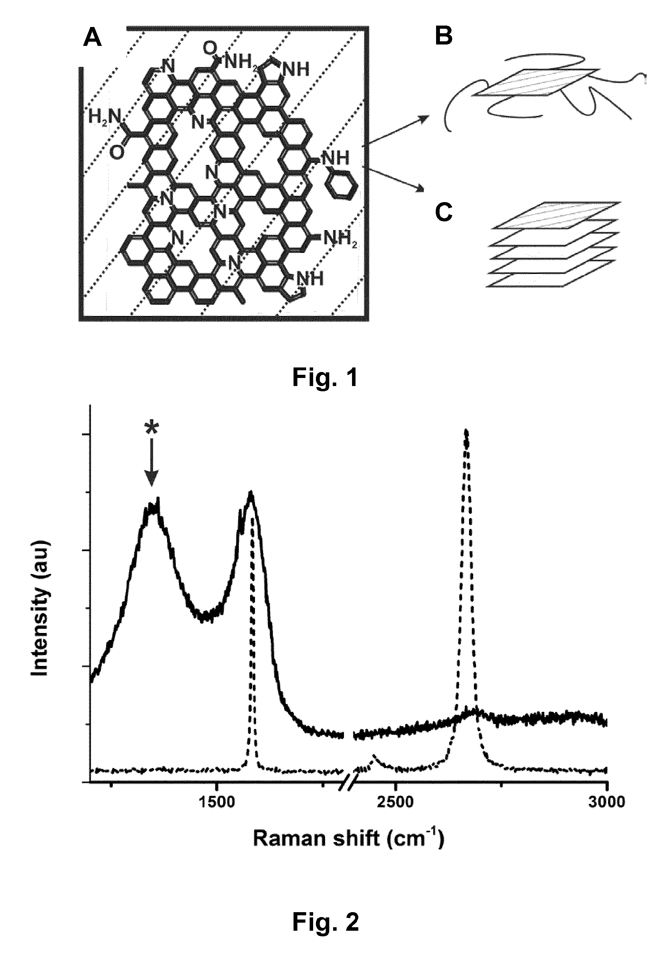

In detail, the present invention is directed to:
[1] A sulfur-curable rubber composition comprising at least one carbon double bond-containing elastomer and a doped graphene-like component.
   Preferably, the doped graphene-like component is a carbon-based material that comprises areas with delocalized pi-electrons. Furthermore, preferably the doped graphene-like component has 2-dimensional properties as illustrated in Fig. 1A-C.
[2] The composition according to [1], which comprises 10 phr (parts by weight, in relation to 100 parts by weight of the predominant elastomer) or less of zinc oxide, preferably less than 3 phr, more preferably less than 2 phr and mostly preferred 1 phr or less of zinc oxide.
[3] The composition according to [1] or [2], which is substantially free of zinc oxide.
[4] The composition according to any one of [1] to [3], wherein the graphene-like component is doped by substitution of one or more carbon atoms.
[5] The composition according to any one of [1] to [4], wherein the one or more carbon atoms are substituted by one or more members of the group consisting of nitrogen, sulfur, boron, phosphor and silicon dopants.
[6] The composition according to [4] or [5], wherein the graphene-like component is doped by substitution of 0.06 to 50 at% (atomic percent), preferably of 0.06 to 40 at%, more preferably of 0.1 to 20 at%, even more preferred of 1 to 6 at%, mostly preferred of 3 to 5 at% of the carbon atoms.
[7] The composition according to any one of [1] to [6], wherein the doped graphene-like component shows a G-band Raman-peak within 1500 - 1750 cm⁻¹ and/or a D-band peak within 1250 - 1450 cm⁻¹, and/or a greatly reduced 2D-band peak within 2600-2750 cm⁻¹, when measured at an excitation wavelength of 532 nm.
[8] The composition according to any one of [1] to [7], wherein the elastomer comprises a polymer or a copolymer comprising at least one double carbon bond-bond.
[9] The composition according to [8], wherein the elastomer is selected from the group consisting of: natural rubber (NR), synthetic polyisoprene rubber (IR), polybutadiene rubber (BR), polyvinyl-butadiene rubber, styrene-butadiene rubber (SBR), nitrile rubber (NBR), hydrogenated nitrile rubber, butyl rubber, halogenated butyl rubbers, chloroprene rubber and ethylene propylene diene monomer rubber (EPDM)
[10] The composition of any one of [1] to [9], further comprising one or more components from the group consisting of: cross-linking agents, vulcanization accelerators, vulcanization activators, fillers and/or coupling agents and optionally one or more additives from the group consisting of: vulcanization inhibitors, adhesion modificators, homogenizers, dispersion agents including fatty acids, stabilizers, pigments, resins and mastication aids.
[11] The composition according to any one of [1] to [10], comprising:
   - 100 phr of at least one double carbon bond-containing elastomer, preferably SBR (Styrene Butadiene Rubber) or S-SBR (solution type Styrene Butadiene Rubber);
   - 0.1 to 3 phr of at least one fatty acid, preferably wherein stearic acid is the fatty acid or at least one of the fatty acids;
   - 0 to 3 phr zinc oxide;
   - 0.01 to 1 phr doped graphene-like material;
   - 0.15 to 3 phr of at least one accelerator, preferably of the Thiasole type; and
   - 0.8 to 5 phr of a cross-linking agent, preferably of sulfur.
[12] A method for preparation of a rubber product comprising:
   (i) mixing the composition of any one of [1] to [9] with one or more components and/or with one or more additives of [10] or the composition according to [11] into a mixture;
   (ii) molding a product from the mixture at a desired form;
   (iii) curing the product, preferably under desired pressure and temperature.
[13] A rubber product, comprising at least partially or at least partially made of a sulfur-cured composition of any one of [1] to [11].
[14] The rubber product according to [13], wherein the product is selected from the group consisting but not restricted to tires, tire treads, seals, insulators, dampers, shoe parts, shoes, sleeves, tubes, pipes, weather seals, stripes, gaskets, clothes, protective clothing, Electromagnetic interference or radio-frequency interference (EMI/RFI) shielding, O-rings, vehicle parts, ship parts, aircraft parts, motor mounts, bumpers, grommets, tips, caps, hoses, belts, rollers, mats and cords.
[15] An object, comprising a product according to [13] or [14].
[16] The object of [15], wherein the object is selected from the group consisting of devices, buildings, ships, aircrafts and vehicles.
[17] The object according to [15] or [16], wherein the object is a vehicle or an aircraft and wherein the comprised product is a tire.
[18] Use of at least one double carbon bond-containing elastomer and a doped graphene-like material in the production of a composition according to any one of [1] to [11] or a rubber product according to [13] or [14].

### Brief description of the drawings

- **Fig. 1:**: (A) sketch of a doped graphene-like material according to the invention with schematic diagram of modified doped graphene-like material (B) and few layer flakes of doped graphene-like material (C).
- **Fig. 2:**: Raman spectra taken on a nitrogen (N-) doped graphene-like material (C-N), a (C-N) powder sample (solid line), and on a single layer graphene (dashed line). The star labeled arrow indicates a Raman peak induced by the structural disorder.
- **Fig. 3:**: Schematic example of rubber processing.
- **Fig. 4:**: (A) Typical torque versus time dependences during vulcanization of rubber. (B) Typical dependences of rubber mechanical properties on crosslinking density. (adapted from "Science and technology of rubber" edited by Frederick R. Eirich.).
- **Fig. 5:**: Torque versus time for mixtures 1-3. Mixture 3 shows a small increase in the vulcanization speed.
- **Fig. 6:**: Torque versus time for mixtures 4, 5 and 8.
- **Fig. 7:**: Torque versus time for mixtures 6 and 7.
- **Fig. 8:**: Torque versus time for mixtures 10 and 11.
- **Fig. 9:**: Higher tensile strength of C-N rubber according to the invention (mixture 8) in comparison to ZnO rubber (mixture 5): 3.9±0.4 and 2.9±0.3 MPa respectively, both with CBS as accelerator.
- **Fig. 10:**: Comparable tensile strengths of C-N rubber (mixture 11) and ZnO rubber (mixture 10), both with MBTS as accelerator.

### Detailed description of the invention

The present invention generally relates to a sulfur-curable rubber composition comprising at least one double carbon bond-containing elastomer and a doped graphene-like component. In an embodiment, the composition of the present invention comprises in addition to the one double carbon bond-containing elastomer a combination of doped graphene-like material and zinc oxide. However, it is the aim of the present invention to reduce the content of metal oxide, for example zinc oxide or lead oxide (PbO), or another metal content activator or different oxide derivate of metals, for example methacrylate in a rubber composition as far as possible. In an embodiment, the composition further comprises at least a curing agent and preferably at least one accelerator of vulcanization.

Accordingly, in a preferred embodiment, a composition is provided as described above, which comprises 10 phr (parts by weight, in relation to 100 parts by weight of the predominant elastomer) or less of zinc oxide, preferably less than 3 phr, more preferably less than 2 phr and mostly preferred 1 phr or less of zinc oxide. In a particularly preferred embodiment, a composition according to the present invention is provided that is substantially free of zinc oxide.

For the purposes of the present invention, the term "graphene-like material" refers to a carbon-based material, substance, etc., which comprises areas with delocalized pi-electrons. The graphene-like material according to the present invention has one or more quasi two-dimensional "graphene" like areas. In graphene, sp2-hybridized carbon atoms are packed in a regular hexagonal pattern, a "honeycomb" structure or lattice. Graphene-like material according to the present invention, however, is graphene with a number of structural defects. These structural defects can be quantified or at least their presence detected by Raman spectroscopy. In addition, as will be described in more detail below, the "graphene-like material" of the present material is doped, which means that a part of the carbon atoms of the material is substituted by atoms of other elements. For an exemplary structure of a "graphene-like material" according to the present invention see Fig. 1A.

In addition, the "graphene-like material" is preferably used in the products described in detail further below, in arrangements comprising a layered structure of one or more layers of the doped graphene-like material; see, for example; Fig. 1B for an arrangement comprising one layer of the graphene-like material and Fig. 1C for an arrangement comprising several layers of the material. In this connection, the terms "component" and "material" are used interchangeably within the present invention, if not explicitly indicated otherwise.

The term "doped" as used within this description means that some, i.e., one or more of the carbon atoms have been substituted by nitrogen, sulfur, boron, phosphor or silicon dopants. Several examples for doped graphene can be found in following documents, the content of which is herewith incorporated in its entirety:
"B, N- and P, N-doped graphene as highly active catalysts for oxygen reduction reactions in acidic media" Choi at al. J. Mater. Chem. A, 2013, 1, 3694-3699 (DOI: 10.1039/c3ta01648j), wherein methods of graphene doping and/or of the materials generated by these methods are described in particular on page 3695, the content of which is herewith incorporated. "Sulfur-Doped Graphene as an Efficient Metal-free Cathode Catalyst for Oxygen" Yang et al. ACS Nano, 2012, 6 (1), pp 205-211 (DOI: 10.1021/nn203393d) wherein methods of graphene doping and/or of the materials generated by these methods are described in particular on page 206, the content of which is herewith incorporated.
"Catalytic Mechanisms of Sulfur-Doped Graphene as Efficient Oxygen Reduction Reaction Catalysts for Fuel Cells" Zhang et al. J. Phys. Chem. C, 2014, 118 (7), pp 3545-3553 (DOI: 10.1021/jp410501u) wherein methods of graphene doping and/or of the materials generated by these methods are described in particular on page 3546, the content of which is herewith incorporated.
"High Catalytic Activity of Nitrogen and Sulfur Co-Doped Nanoporous Graphene in the Hydrogen Evolution Reaction" Ito et al., Angew. Chem. Int. Ed., 2015, 54, pp 2131-2136 (DOI: 10.1002/anie.201410050) wherein methods of graphene doping and/or of the materials generated by these methods are described in particular on page 2131, the content of which is herewith incorporated.
"Si-doped graphene: an ideal sensor for NO- or NO2-detection and metal-free catalyst for N2O-reduction" Chen et al. J Mol Model,2012, 18(5), pp 2043-2054 (DOI: 10.1007/s00894-011-1226-x) wherein methods of graphene doping and/or of the materials generated by these methods are described in particular on page 2045, the content of which is herewith incorporated.

In accordance with a preferred embodiment of the present invention, 50 at% (atomic percent), preferably 40 at% or less, more preferably 20 at% or less, more preferred 6 at% or less and mostly preferred 5 at% or 4 at% or less of the carbon atoms of the graphene-like component are substituted by dopants. In this connection, lower limit of substitution of the carbon atoms by dopants is in one embodiment preferably at 0.06 at% or more, more preferably at 0.1 at% or more, even more preferred at 1 at% or more and mostly preferred at 3 at% or 4 at% or more of the carbon atoms. The amount of doping, and the configurations of the dopants can be estimated by XPS (x-ray photoelelectron spectroscopy), a standard method to quantify elemental composition; see, e.g., "Review on Recent Progress in Nitrogen-Doped Graphene: Synthesis, Characterization, and Its Potential Applications" Wang et al. ACS Catal. 2012, 2, 781-794 (dx.doi.org/10.1021/cs200652y). For example, the amount of nitrogen atoms as a dopant and their configuration, e.g., quaternary, pyridinic and pyrrolic nitrogen bonding configuration, can be estimated by XPS.

Accordingly, in a preferred embodiment doped graphene according to the invention means that the graphene-like material is doped by substitution of 0,06 - 50 at%, preferably 0,1 - 20 at%, more preferably 1-6 at%, much more preferably 3-5 at% of the carbon atoms, i.e. preferably the carbon atoms have been replaced with nitrogen and/or sulfur and/or boron and/or phosphor and/or silicon.

N-doped graphene like material (C-N) can be prepared, for example, by thermal annealing of Graphene oxide in ammonia, see, e.g.,: X. Li et al., "Simultaneous Nitrogen Doping and Reduction of Graphene Oxide", J. Am. Chem. Soc. 2009, 131, 15939-15944, the content of which is herewith incorporated in its entirety.

Graphene oxide is a strongly oxidized graphene with ratio of carbon to oxygen of around 2.5. Oxidation of graphene is a random process creating a distribution of oxide groups defecting the initial graphene structure. Reduction of the graphene oxide results in a less number of oxygen atoms.

In Figure 1A a sketch of N-doped graphene-based material (C-N) having "graphene"-like areas with delocalized Pi electrons and quasi two dimensional (2D) properties is shown. One can see the hexagonal pattern, the nitrogen and the remaining oxygen. Accordingly, in some embodiments, the "graphene-like material" according to the present invention in addition to the dopants further comprises oxygen, for example, as part of one or more amid-groups.

It is possible to modify the doped graphene-like material to, e.g., enhance it dispersibility in elastomers, this is schematically shown in Figure 1b. Doped graphene-like material according to the invention can exist as a single layer or as a few layer flakes, schematically shown in Figure 1C.

The graphene-like nature of the material can be proven by Raman spectroscopy. Figure 2 shows raman spectra taken on (C-N) powder sample (solid line) and on a single layer graphene mechanically exfoliated onto freshly cleaved mica surface (dashed line). Excitation laser wavelength was 532 nm.

However, as indicated above, in a preferred embodiment, the graphene-like material according to the present invention is graphene with a number of structural defects in the regular hexagonal pattern and some dopants substituting the above indicated amounts of carbon atoms. These structural defects can be quantified or at least confirmed by the use of Raman spectroscopy.

The doped graphene-like material according to the invention shows a broad G-peak, coming from the sp²- hybridized carbon of the graphene at 1500 - 1750 cm⁻¹ and one additional (*) marked D-Peak between 1250 - 1450 cm⁻¹ activated by the structural defects; see Fig. 2 for an exemplary Raman spectrum of doped graphene-like material of the present invention. Furthermore, the 2D-Band at 2600 - 2750 cm⁻¹ referred to the single layer structure of graphene decreases with the increase of density of structural defects in the graphene structure. Accordingly, in a preferred embodiment the present invention further relates to a composition as described herein, wherein the doped graphene-like material shows a G-band with peak between 1500 - 1750 cm⁻¹ and/or a D-band with peak between 1250 - 1450 cm⁻¹, and/or a greatly reduced 2D-band with peak between 2600-2750 cm⁻¹ measured at an excitation wavelength of 532 nm in the Raman-spectrum.

An elastomer is a polymer with viscoelasticity (having both viscosity and elasticity). The term, which is derived from "elastic polymer", is often used interchangeably with the term rubber or more professional "unvulcanized rubber". Each of the monomers which link to form the polymer is usually made of carbon, hydrogen, oxygen and/or silicon, other elements like nitrogen, sulfur, halogens etc. could be a part of it also. Elastomers are amorphous or partially crystalline polymers. They are elastic above their glass transition temperature. Those, which contain double carbon bond bonds, are named as double carbon bond-containing elastomers.

S-vulcanization is suitable for the following types of elastomers or their blends, which contains at least one double carbon bond bond: Natural rubber (NR), synthetic polyisoprene rubber (IR), polybutadiene (BR), styrene-butadiene rubber (SBR), nitrile rubbers (NBR), butyl rubber, halobutyl rubbers, chloroprene rubber, ethylene propylene diene monomer rubbers (EPDM), as described, for example, in the Science and technology of Rubber third edition edited by James E. Mark, Burak Erman and Frederick R.Eirich. In a preferred embodiment the composition according to the present invention as described hereinabove and below is provided, wherein the elastomer is selected from the group consisting of: natural rubber (NR), synthetic polyisoprene rubber (IR), polybutadiene rubber (BR), polyvinyl-butadiene rubber, styrene-butadiene rubber (SBR), nitrile rubber (NBR), hydrogenated nitrile rubber, butyl rubber, halogenated butyl rubbers, chloroprene rubber and ethylene propylene diene monomer rubber (EPDM)

Furthermore, also co-polymers or block-co-polymers of the elastomers listed above or polymers containing blocks listed above, or more general polymers containing double carbon bond bonds, can be used for S-vulcanization. For example, a long polymer chain with no double carbon bond bonds, but with the terminal groups containing double carbon bond groups can be used for S-vulcanization. Therefore, in an embodiment the composition according to the present invention is provided, wherein the elastomer comprises a polymer or a copolymer comprising at least one double carbon bond.

Typically vulcanization systems have the following components:
Elastomers, their blends or co-blends, which contain at least one double carbon bond bond.
Double carbon bond containing elastomers like polybutadien, polyisoprene, polyvinyl-butadiene, double carbon bond containing copolymer elastomers like styrene-butadiene, isobutylene-isoprene as described, for example, in the handbook of elastomers second edition edited by Bhowmick and Stephans.
Cross-linking agents like sulfur (in variable allotropic forms, for example: rhombic or polymeric) and/or sulfur donors including both sulfur blends with organic and inorganic substances and substances which contain chemically bound sulfur (i.e. molecules containing sulfur).
Accelerators, i.e. materials that accelerate vulcanization of rubber. There are among other types, like dithiophosphate essentially three types of accelerators: thiazole-, dithiocarbamate- and amine-types as described, for example, in "Science and technology of rubber" edited by Frederick R. Eirich. In an embodiment of the present invention a mixture of accelerators of one or more of the above-mentioned types is used.
Activators, or vulcanizing activators, which are compounds able to increase the efficiency of the accelerators. In the presence of an accelerator, an activator increases vulcanizing rate, reduces vulcanization temperature and improves mechanical properties of the product. These activators are frequently metal oxides, in particular zinc oxide or organic salts of metals and are described, e.g., in H.-W. Engels: Rubber 4. Chemicals and Additives Ullmann's Encyclopedia of Industrial Chemistry, Wiley-VCH Verlag 2004.
Additives that are either used to enhance rubber processing or modify properties of vulcanized rubber or to improve the rubber production costs (i.e. lower the costs, sometimes at expenses of rubber properties). Fatty acids like stearic acid are used to improve dispersion of components. Stearic acid at high concentrations can also be used as an anti-scorching agent, i.e. it does not allow vulcanization to happen at low temperatures, which may hinder processing of rubber. Zinc ion is made soluble by salt formation between the acid and the oxide. For this reason stearic acid is called activator too.

Furthermore, in an embodiment the composition or mixture according to the present invention contains, as fillers, carbon black and / or silica in conventional amounts.

In an embodiment, the rubber composition also contains other fillers from the group consisting of aluminum silicates, chalk, starch, magnesium oxide, titanium dioxide, re-used polymers, organic wastes such as husks, shells or rubber gels.

For improving the processability and for connection of the silica and other polar fillers in the diene rubber silane, in an embodiment coupling reagents are used within the compositions of the present invention. The silane coupling agents are known in the art, for example, from DE 10 2009 059 207 A1 the disclosure content of which is herewith incorporated in its entirety.

In an embodiment, the rubber composition of the present invention further comprises one or more selected from the group comprising:
- conventional additives in addition to these mentioned above such as vulcanization inhibitors, for example, N-cyclohexy(thio)phthalimide;
- variable compounds that modify, e.g., rubber adhesion to variable materials used to enhance rubbers like metal carcasses for instance hexachlorparaxilolum;
- homogenizers that improve blending of, e.g., variable rubbers for instance special types of bitumen;
- dispersion agents improving the mixing of solid particles in rubbers like fatty acids or calcium and zinc salts;
- Stabilizers, preferably antioxidants and/or antiozonants for UV protection, protection against thermo or mechanical destruction such as (N-2-Propyl-N'-phenyl-p-phenylenediamine or N-(1,3-dimethylbutyl)-N'-phenyl-p-phenylenediamine));
- oils for example TDAE (treated distillate aromatic extract) that can be used both for mastication and as a dispersion agent;
- pigments (e.g., iron(III)oxide); and
- waxes, resins and/or mastication aids, such as 2,2'-dibenzamidodiphenyl disulfide.

Accordingly, in a particularly preferred embodiment, the composition of the present invention as described hereinabove and below, further comprises one or more components from the group consisting of: cross-linking agents, vulcanization accelerators, vulcanization activators, fillers and/or coupling agents and optionally one or more additives from the group consisting of: vulcanization inhibitors, adhesion modificators, homogenizers, dispersion agents including fatty acids, stabilizers, pigments, resins and mastication aids with the particular components from the group as specified hereinbefore.

As will be acknowledged by those skilled in the art, the amounts of the particular components in a rubber composition may vary. However, in a preferred embodiment, the composition in accordance with the present invention comprises:
- 100 phr (parts by weight, in relation to 100 parts by weight of the predominant elastomer) of at least one double carbon bond-containing elastomer;
- 0.1 to 3 phr of at least one fatty acid, preferably wherein stearic acid is the fatty acid or at least one of the fatty acids;
- 0 to 3 phr zinc oxide;
- 0.01 to 1 phr doped graphene-like material;
- 0.15 to 3 phr of at least one accelerator, preferably of the thiasole type; and
- 0.8 to 5 phr of a cross-linking agent, preferably sulfur.

In a preferred embodiment the double carbon bond-containing elastomere is SBR (Styrene Butadien Rubber) or solution-polymerized SBR (SSBR), as described in detail in the Examples.

The preparation of the rubber mixture according to the invention can be effected in conventional manner as described below and in detail in the Examples.

Usually first, a base mixture is prepared which contains all constituents except the crosslinking agent, prepared in one or in several stages. After that the final mixture is created by the addition of the cross-linking agent. Rarely blending is a one-step process: cross-linking agent can be added together with all other components.

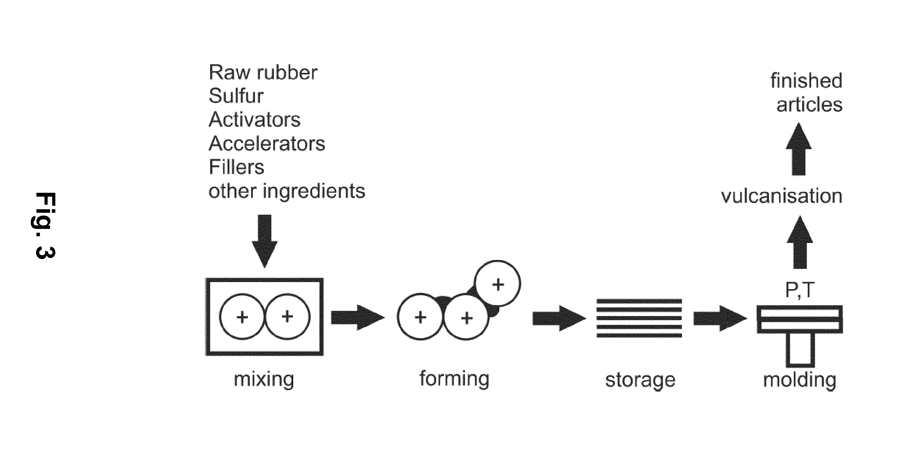

The mixture is then further processed, for example, by molding or an extrusion process, and brought into the desired shape. The final step is s-vulcanization, i.e. curing at desired conditions. Typical rubber processing, as performed in accordance with the present invention is shown in Figure 3.

Accordingly, the present invention is also related to a method for preparation of a rubber product comprising :
(i) mixing the composition of the present invention with one or more components and/or with one or more additives or the composition as defined hereinabove into a mixture;
(ii) molding a product from the mixture at a desired form;
(iii) curing the product under desired pressures and temperatures.

Preferably, the curing step is performed within a suitable means, such as a press mould or an autoclave, under controlled desired pressure and temperature. Alternatively, the curing is performed inside an autoclave. Within the present invention the terms "curing", "cross linking" and "vulcanization" are used interchangeably, wherein preferably they refer to the sulfur-dependent process type of rubber production, i.e. "sulfur vulcanization" or "sulfur curing"

In an embodiment, the step of mixing of the ingredients is separated into two stages: in the first step all ingredients are mixed step by step except of sulfur. In a second step sulfur is then added. In an embodiment, the first step is performed at a higher temperature than the second step. In a preferred embodiment the first step is performed at a temperature of about 120°C, preferably wherein further the first step is performed for about 8 minutes. The second step is preferably performed for a shorter time and/or at a shorter temperature, preferably wherein the temperature is about 75°C and the time is about 3 minutes.

Furthermore, when performing the method of the present invention in an embodiment molding is performed at a temperature of about 125°C to about 280°C, preferably at about 155°C to about 165°C, and mostly preferred at about 160°C; and the external pressure is at about 1-50 atm, preferably at about 15-30 atm.

In the case when curing is not performed within a press mould, but, for example, by autoclave vulcanization, pressure and temperature are regulated by capabilities of industrial equipment. Preferably, mixing and curing steps are modified then to match the capabilities of industrial equipment and industrial requirements.

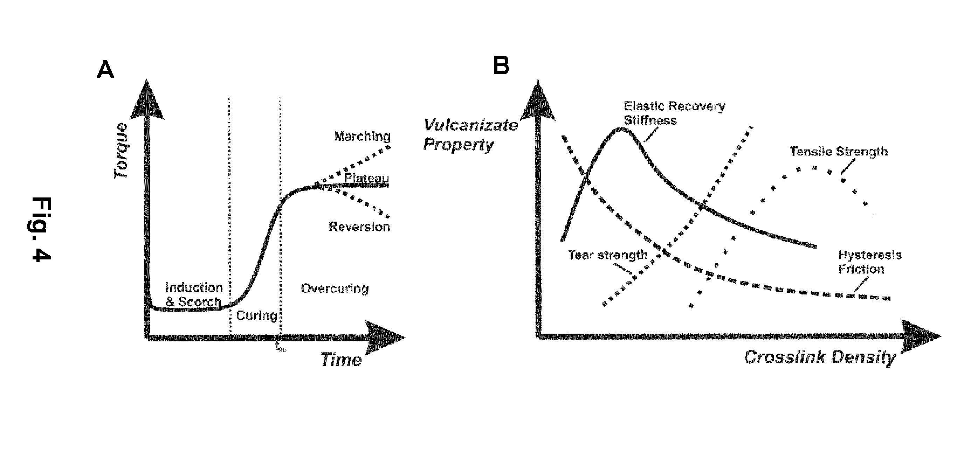

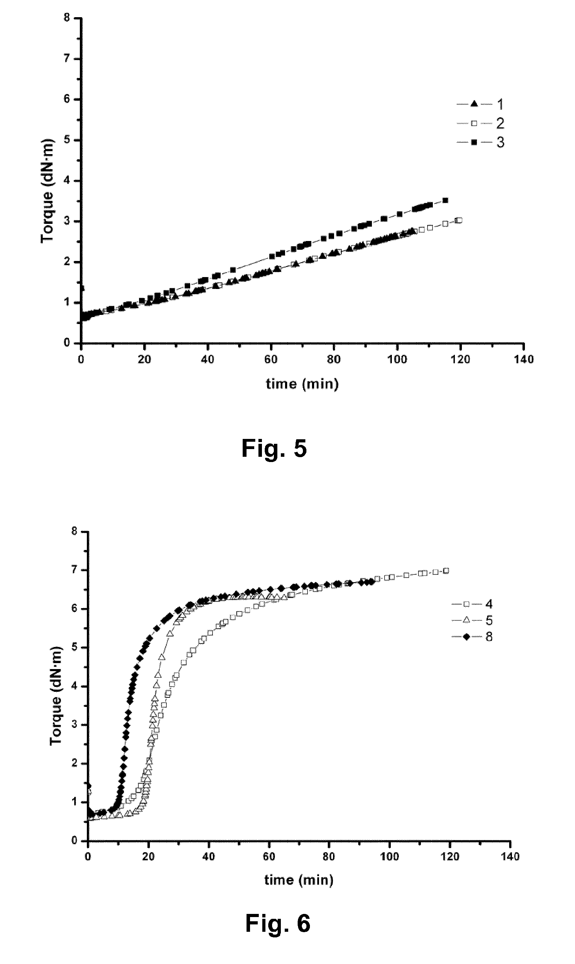

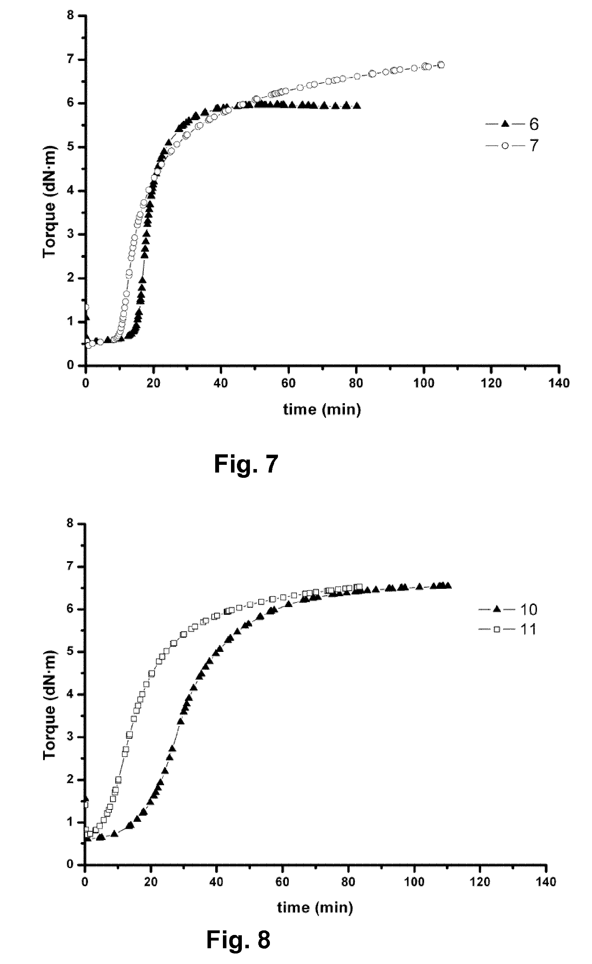

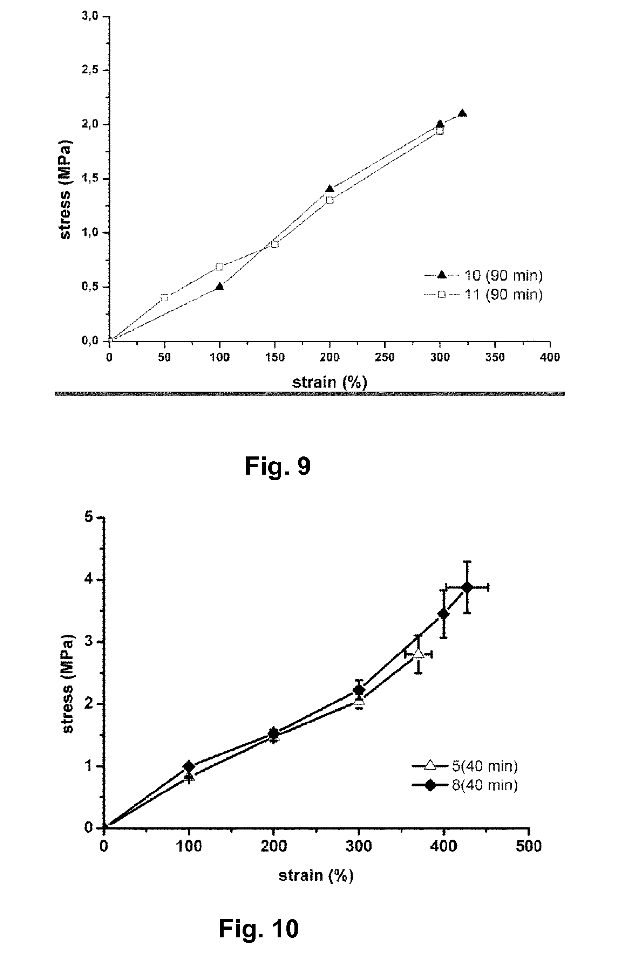

As shown in the figures and described in the Examples, the rubber compositions according to the present invention comprising a doped graphene-like material with reduced zinc oxide content or without zinc oxide, show a shorter scorch (induction time; see Fig.4 for definition) but same cure kinetics in comparison to mixtures with ZnO. This allows to achieve optimal rubber properties within shorter time by addition of C-N, i.e. a higher average faster vulcanization speed (see, e.g., Example 1, mixture 8 in fig. 6, mixture 7 in Fig. 7, and mixture 11 in Fig. 8) and a comparable or even increased tensile strength in comparison to conventional rubber compositions comprising zinc oxide as vulcanization activator (Example 2, Figs. 9 and 10). See in this respect, for example, Example 1 and corresponding Figs 5 to 8, as described in the following, wherein Fig. 5 shows an increase in vulcanization speed in mixture 3 with 0,10 phr of a nitrogen doped graphene-like material in comparison to mixture 2 with 0,05 phr of doped graphene-like material and the control mixture 1 without ZnO and without graphene-like material; Fig.6 shows mixture 8 with 0,10 phr of a nitrogen doped graphene-like material shows a shorter scorching time than mixture 5 with 3 phr of zinc oxide and without graphene-like material. Moreover it demonstrates comparable cure kinetics with mixture 5 and faster cure kinetics to compare with control mixture 4 without both vulcanization activators; and Fig 7 that shows mixture 7 with 0,05 phr of a nitrogen doped graphene-like material shows a shorter scorching time and higher torque maximum value than mixture 6 with 0,02 phr of a nitrogen doped graphene-like material;

Furthermore see also Example 2 and Fig. 8 wherein mixture 11 with 0,10 phr of a nitrogen doped graphene-like material shows a shorter scorching time than mixture 10 with 3 phr of ZnO as vulcanization activator and at least see Example 1, Fig. 9, mixture 8 with 0,10 phr of a nitrogen doped graphene-like material showing a higher tensile strength than rubber comprising zinc oxide as activator (mixture 5). Example 2, Fig 10, mixture 11 with 0,10 phr shows comparable mechanical properties with mixture 10 with 3 phr of ZnO. For a detailed description of the tests performed within the present invention, see the description in Examples 1 and 2.

Accordingly the rubber compositions of the present invention show comparable or even superior properties in comparison to conventional rubber compositions comprising higher zinc oxide amounts and may therefore be preferably used for production of rubber products produced up to date with the conventional rubber compositions. Therefore, the present invention also relates to rubber products, comprising at least partially or at least partially made of a sulfur-cured composition of the present invention as described herein. It is known in the art that there are numerous products made of sulfur-cured rubber compositions. As it is an aim of the present invention to provide alternative rubber compositions for rubber products, wherein the compositions comprise less of zinc oxide, most or all of these products may also be produced in part or completely of the rubber compositions of the present invention.

Accordingly, in an embodiment the present invention relates to a rubber product, wherein the product is selected from the group consisting of tires, tire treads, seals, insulators, dampers, shoe parts, shoes, sleeves, tubes, pipes, weather seals, stripes, gaskets, clothes, protective clothing Electromagnetic interference or radio-frequency interference (EMI/RFI) shielding, O-rings, vehicle parts, belts, ship parts, aircraft parts, motor mounts, bumpers, grommets, tips, caps, hoses, rollers, mats and cords.

In one embodiment the products including but not restricted to shoes, clothes and protective clothing are designed and or made as heat protective clothing, wherein the compositions of the present invention act as a physical barrier that prevents the diffusion of heat, gases and the by-products of thermal decomposition and preferably have an extremely high rupture resistance. Preferably, the compositions of the present invention are used for surface coating of these products in this embodiment.

Many of these products are further used as parts for more complex objects comprising, or made of several parts. Accordingly, the present invention also relates to an object, comprising a product as defined hereinabove. In a preferred embodiment, the object is selected from the group consisting of devices, buildings, ships, aircrafts and vehicles. Preferably, if the object is a vehicle or an aircraft the comprised product is a tire.

In addition, the present invention also relates to a use of at least one double carbon bond-containing elastomer and a doped graphene-like material in the production of a composition or a rubber product as defined herein above.

The term "about" as used herein defines a possible deviation from the concerned value in the range of 1%-20%, in particular of 1%-15%, in particular of 1%-10%, in particular of 1%-5%, in particular of 1%-2% of the value as defined without usage of this term.

In the following, the invention is explained in more detail with reference to the Examples.

The above disclosure generally describes the present invention. Several documents are cited throughout the text of this specification. Full bibliographic citations may be found at the end of the specification immediately preceding the claims. The contents of all cited references (including literature references, issued patents, published patent applications as cited throughout this application and manufacturer's specifications, instructions, etc.) are hereby expressly incorporated by reference; however, there is no admission that any document cited is indeed prior art as to the present invention.

A more complete understanding can be obtained by reference to the following specific Examples which are provided herein for purposes of illustration only and are not intended to limit the scope of the invention.

### Examples

### Example 1: Rubber sample preparations and their analysis

### Mixing:

The rubber composition was prepared by mixing of the ingredients (see table 1) in a two roll open mill rubber machine at ambient temperature. Alternatively, it was performed at a higher temperature of about 75°C. The ingredients were added step by step into the polymer matrix within 8 to 10 minutes.

Alternatively, mixing of the ingredients was performed in two stages: mixing all ingredients step by step excepting sulfur in an internal rubber mixer within 8 minutes to a temperature of about 120°C. Sulfur was added in a second stage into the two-roll open mill rubber machine within 3 minutes at ambient temperature or at about 75°C

In the case when fillers are also mixed into the composition, mixing is performed as follows:
In an internal rubber mixer: The at least one diene-containing elastomere is filled and mixed for about 0-2 min. Then the filler is added and the composition mixed for 2-6 min, followed by addition and mixing of an activator and stearic acid for 6-7 min, an accelerator for 7-8 min. Subsequently, all ingredients are mixed for 8-10 min, followed by the steps below.
Afterwards, in a two roll open mill rubber machine sulfur is added within 10-11 min and all ingredients are mixed for 11-12 min.

### Molding:

Molding was performed at 160°C with an external pressure in the range of 15-30 atm.

### Vulcanization kinetics

The vulcanization kinetics was followed with the Rubber Process Analyzer. The instrument was calibrated according to ASTM D 5289 standard.

### Cure/Curing

The compounds were compression molded into square plates with the thickness ∼1 mm and cured at 160°C.

### Tensile strength

Specimens for tensile test were cut out from the compression molded plates by a manual cutting press. Each rubber plate was cut onto six specimens. Tensile test was performed using Instron 1122. The test speed was 500 mm/min. RAMAN-measurements were performed with a Raman microscope (Explora Plus, Horiba Ltd.).

Figure 4A shows a typical torque versus time dependences during vulcanization of rubber. Torque depends on rubber viscosity and is roughly proportional to crosslinking density of rubber. Starting from zero time, the sample temperature is increased sharply to vulcanization temperature. The initial increase of the temperature leads to a decrease of the viscosity and torque, correspondingly. After a certain delay, vulcanization starts to increase crosslinking density (curing). The delay depends on the activity of the additives (activators, accelerators), i.e. on their ability to initiate the beginning of crosslink formation. Then when the materials participating in crosslinking are consumed, the torque can level off, but also a slow increase or decrease is possible. In Fig. 4B typical dependences of rubber mechanical properties on crosslinking density are shown.

**Table 1.: Exemplary recipes of mixtures used to characterize the invention.**

| Ingredient | 1 | 2 | 3 | 4 | 5 | 6 | 7 | 8 | 10 | 11 |
|---|---|---|---|---|---|---|---|---|---|---|
| | phr | phr | phr | phr | phr | phr | phr | phr | phr | phr |
| SSBR-2560 | 100,00 | 100,00 | 100,00 | 100,00 | 100,00 | 100,00 | 100,00 | 100,00 | 100,00 | 100,00 |
| Stearic acid | 2,00 | 2,00 | 2,00 | 2,00 | 2,00 | 2,00 | 2,00 | 2,00 | 2,00 | 2,00 |
| ZnO | - | - | - | - | 3,00 | 1,00 | - | - | 3,00 | - |
| C-N | - | 0,05 | 0,10 | - | - | 0,02 | 0,05 | 0,10 | - | 0,10 |
| MBTS | - | - | - | - | - | - | - | - | 2,10 | 2,10 |
| CBS | - | - | - | 1,70 | 1,70 | 1,70 | 1,70 | 1,70 | - | - |
| Sulfur | 1,80 | 1,80 | 1,80 | 1,80 | 1,80 | 1,80 | 1,80 | 1,80 | 1,80 | 1,80 |

| | | | | | | | | | | |
|---|---|---|---|---|---|---|---|---|---|---|
| phr = parts per hundred (mass units of rubber), | | | | | | | | | | |

SSBR-2560 is a typical rubber for the production of tires is solution Styrene-Butadiene Rubber (SSBR) available, for example, from styron (SPRINTAN™ SLR-Series) or Dynasol (Solprene® 1205).

ZnO - "Zinc Oxide" (CAS 1314-13-2) is an activator for the production of rubber items. It is available, for example, from ZINC OXIDE LLC or Sigma-Aldrich Co. LLC

Stearic acid, as a saturated fatty acid is available for instance from Sigma-Aldrich Co. LLC. C-N - Nitrogen doped graphene powder was purchased from ACS Material LLC, USA.

MBTS (ALTAX or dibenzothiazyl disulfide) - "2,2'-Dithiobis(benzothiazole)"(CAS 120-78-5) an accelerator of thiasole type is available, for example, from Sigma-Aldrich Co. LLC (USA) or Santa Cruz Biotechnology, Inc. (USA)

CBS - "N-Cyclohexyl-2-benzothiazole sulfenamide" (CAS 95-33-0) an accelerator of Thiasole type is available for example from Rongcheng Chemical General Factory Co., Ltd. or Shandong Caoxian Stair Chemical&Technology Co., Ltd.(China).

Sulfur - is cross-linking agent (CAS 7704-34-9) that is available, for example, from Sigma-Aldrich Co. LLC (USA).

Mixtures 1-3 were used to test if N-doped graphene like material (C-N) acts as an accelerator. The mixtures 1 to 3 do not include any standard accelerator. Analyses of torque versus time dependences for mixtures 1 to 3 imply that adding of C-N has a limited impact on the vulcanization speed (Fig. 5).

Mixtures 4 to 11 were used to test if C-N acts as an activator (Fig. 6, 7 and 8). Mixture number 4 is the reference with neither ZnO nor C-N included and with CBS as an accelerator. Mixture number 5 includes 3 phr of ZnO and shows shorter scorch time and faster curing as compared to mixture 4. This is due to ZnO known to be an activator. Mixture 6 includes 0.02 phr of C-N replacing 2/3 (2 phr) of the initial ZnO from 5. Vulcanization of mixture 6 starts faster as compared with mixture 5. Mixtures 7 and 8 do not include ZnO, but C-N only. Due to shorter scorch time, vulcanization of mixtures 7 and 8 is faster compared with mixture 4 (see Fig. 6 and Fig. 7). The above implies C-N to act as an activator alone and in the mixture with ZnO. Furthermore, the above implies C-N to be a more effective activator than ZnO. Similar slopes of cure rates for C-N and ZnO indicate that they could have similar activator properties. Mixture 10 replaces CBS by MBTS - another accelerator - and includes ZnO as activator. Mixture 11 replaces ZnO by C-N to compare with mixture 10. Curing of mixture 11 happens noticeably faster as compared with mixture 10 (Fig. 8). This supports the conclusion that C-N is a more effective activator as compared with ZnO.

Figure 5 shows Torque versus time for mixtures 1-3. Mixture 3 indicates an increase in the vulcanization speed (slope of the curve).

Figure 6 shows torque versus time for mixtures 4, 5 and 8. Mixtures 5 and 8 show sharper curing slope compared to mixture 4. It is technologically important to have well defined curing time. Curing in mixture 8 starts earlier than in mixture 5 implying (C-N) to be more effective to compare with ZnO. Note that concentration of (C-N) in mixture 8 was just 0.1 phr to compare with 3 phr of ZnO in mixture 5. Figure 7 shows Torque versus time for mixtures 6 and 7. Mixture 6 shows sharp curing slope, this implies that (C-N) works well in the mixture with ZnO, i.e. (C-N) can be used to replace ZnO partially.

Figure 8 shows torque versus time for mixtures 10 and 11. Curing in mixture 11 starts earlier and goes faster to compare with mixture 10, this implies C-N to be more effective to compare with ZnO. Note that concentration of C-N in mixture 11 is just 0.1 phr to compare with 3 phr of ZnO in mixture 10.

Figure 4B demonstrates that in order to achieve optimal properties, an optimal cross-linking density is required. This implies also optimal vulcanization time. In the case of a more efficient activator, one may want to reduce the vulcanization time. C-N is an more effective activator, thus one might want to reduce the vulcanization time for mixtures including C-N. Yet here rubbers are compared that were cured over the same time.

### Example 2.: Comparison of the C-N rubber produced in accordance to the present invention with a standard ZnO rubber.

The rubbers were vulcanized over same time (40 minutes for mixtures 5 and 8 and 90 minutes for mixtures 10 and 11).

One sample of each: C-N rubber (mixture number 8 and mixture number 11) and ZnO rubber (mixture number 5) were prepared, vulcanized and tested. The stress-strain dependences for the samples were shown in figures 9 and 10. Tensile strength of C-N (8) sample exceeded that of ZnO rubber (5): 3.9±0.4 and 2.9±0.3 MPa, respectively. In both mixtures CBS was used as accelerator. Tensile strengths of mixtures 10 and 11, wherein MBTS has been used as accelerator are comparable.

## Claims

1. A sulfur-curable rubber composition comprising at least one double carbon bond-containing elastomer and a doped graphene-like component.

2. The composition according to claim 1, which comprises 10 phr (parts by weight, in relation to 100 parts by weight of the predominant elastomer) or less of zinc oxide, preferably less than 3 phr, more preferably less than 2 phr and mostly preferred 1 phr or less of zinc oxide.

3. The composition according to claim 1 or 2, which is substantially free of zinc oxide.

4. The composition according to any one of claims 1 to 3, wherein the doped graphene-like component comprises areas with delocalized pi-electrons.

5. The composition according to any one of claims 1 to 4, wherein the graphene-like component is doped by substitution of one or more carbon atoms, preferably by one or more members of the group consisting of nitrogen, sulfur, boron, phosphor and silicon dopants.

6. The composition according to claim 5, wherein 0.06 at% to 50 at% (atomic percent), preferably 0.06 at% to 40 at%, more preferably 0.1 at% to 20 at%, even more preferred 1 at% to 6 at%, mostly preferred 3 at% to 5 at% of the carbon atoms are substituted by dopants.

7. The composition according to any one of claims 1 to 6, wherein the doped graphene-like component shows a G-band with peak between 1500 - 1750 cm⁻¹ and/or a D-band with peak between 1250 - 1450 cm⁻¹, and/or a greatly reduced 2D-band with peak between 2600-2750 cm⁻¹, when measured at an excitation wavelength of 532 nm in the Raman-spectrum.

8. The composition according to any one of claims 1 to 7, wherein the elastomer comprises a polymer or a copolymer comprising at least one double carbon bond-bond.

9. The composition according to claim 8, wherein the elastomer is selected from the group consisting of: natural rubber (NR), synthetic polyisoprene rubber (IR), polybutadiene rubber (BR), polyvinyl-butadiene rubber, styrene-butadiene rubber (SBR), nitrile rubber (NBR), hydrogenated nitrile rubber, butyl rubber, halogenated butyl rubbers, chloroprene rubber and ethylene propylene diene monomer rubber (EPDM)

10. The composition of any one of claims 1 to 9, further comprising one or more components from the group consisting of: cross-linking agents, vulcanization accelerators, vulcanization activators, fillers and/or coupling agents and optionally one or more additives from the group consisting of: vulcanization inhibitors, adhesion modificators, homogenizers, dispersion agents including fatty acids, stabilizers, pigments, resins and mastication aids.

11. The composition according to anyone of claims 1 to 10, comprising:
- 100 phr of at least one double carbon bond-containing elastomer, preferably SBR (Styrene Butadien Rubber) or S-SBR (solution type Styrene Butadiene Rubber);
- 0.1 to 3 phr of at least one fatty acid, preferably wherein stearic acid is the fatty acid or at least one of the fatty acids;
- 0 to 3 phr zinc oxide;
- 0.01 to 1 phr doped graphene-like material;
- 0.15 to 3 phr of at least one accelerator; and
- 0.8 to 5 phr of a cross-linking agent, preferably of sulfur.

12. A method for preparation of a rubber product comprising:
(i) mixing the composition of any one of claims 1 to 9 with one or more components and/or with one or more additives of claim 10 or the composition according to claim 11 into a mixture;
(ii) molding a product from the mixture at a desired form;
(iii) curing the product under pressure and at controlled temperature.

13. A rubber product, comprising at least partially or at least partially made of a sulfur-cured composition of any one of claims 1 to 11, preferably wherein the product is selected from the group consisting of tires, tire treads, seals, insulators, dampers, shoe parts, shoes, sleeves, tubes, pipes, weather seals, stripes, gaskets, clothes, protective clothing Electromagnetic interference or radio-frequency interference (EMI/RFI) shielding, O-rings, vehicle parts, ship parts, aircraft parts, motor mounts, bumpers, grommets, tips, caps, hoses, rollers, mats, belts and cords.

14. An object, comprising a product according to claim 13, preferably wherein the object is selected from the group consisting of devices, buildings, ships, aircrafts and vehicles, wherein preferably the comprised product is a tire if the object is a vehicle or an aircraft.

15. Use of at least one double carbon bond-containing elastomer and a doped graphene-like material in the production of a composition according to any one of claims 1 to 11 or a rubber product according to claim 13.
